# EUROPEAN PATENT SPECIFICATION

(11) **EP 4 659 915 B1**
(45) Date of publication and mention of the grant of the patent: **28.10.2026**
(21) Application number: 25181389.5
(22) Date of filing: 06.06.2025
(51) Int. Cl.: B25J 15/00, B21D 43/11, B21D 43/18, B25J 15/06, B25J 19/00, B65G 47/91

(54) **EQUIPMENT FOR HANDLING SHEET MATERIALS**
AUSRÜSTUNG FÜR DIE HANDHABUNG VON PLATTENMATERIAL
ÉQUIPEMENT POUR LA MANIPULATION DES MATÉRIAUX EN FEUILLES

(30) Priority: 07.06.2024 CZ 20240237
(43) Date of publication of application: 10.12.2025
(73) Proprietor: Stafek, Michal, Prague 4, 140 00 (CZ)
(72) Inventor: Bednár, David, 39701 Písek, Budejovické Predmestí (CZ)
(74) Representative: Lorenc, Lukas

(56) References cited:
- DE-A1- 102018 105 025
- JP-A- 2017 001 042
- US-A1- 2016 271 678

## Description

### Filed of the invention

The invention relates to a device for handling sheet materials, which is intended primarily for automated plants with robotic devices for transferring and moving sheet material blanks, mainly sheet metal, for further processing.

### State of the art

In the electrical industry, in the automotive industry, in mechanical engineering, in the metallurgical industry, but also in many other operations such as warehouses and large warehouses, it is necessary to handle metallurgical materials of larger dimensions. These metallurgical materials, objects, have to be moved from point A to point B. However, these materials may be dangerous, bulky or too heavy for conventional manual handling. The classical and commonly used method of transport are manipulators and pallet trucks, which allow the transport of large sheets of metal outdoors, but also indoors. The disadvantage of this solution is that this method is suitable for transport mainly in warehouses, during loading and reloading, etc., where larger volumes of material are transported. It is not suitable for transporting single sheets of metal sheets and, moreover, for filling production lines.

These shortcomings are eliminated by the carrier frames equipped with a holding mechanism, which is designed to hold the carried sheet object firmly so that it does not come loose during transportation. In the case of metallic iron or steel sheets, it is advisable to take advantage of the physical properties of the iron and to use magnetic clips for a firm grip. These use electromagnets which, when electricity passes through their coil, magnetise their core which then firmly anchors the steel plate and as long as the flow of electricity is not interrupted, the magnetism continues.

Magnetic applications can be divided into two main groups: belt magnets and magnetic clamps. Belt magnets are used to clamp and release metallic materials without damaging the load. Magnetic clamps, on the other hand, can instantly fix an object without deformation, making it accessible from five sides during grinding, milling, circular machining, etc. Both of these types are further divided according to the technology used into permanent magnets, electro permanent magnets, electromagnets and battery magnets. Walmag is an example of the use of these technologies. The disadvantage of these technologies, since electromagnets are the most commonly used, is that magnet-based handling devices are very heavy and need a sturdy frame to carry them. In the event of an accidental interruption of electrical power, the sheet metal being moved is not protected by anything.

An analogue of magnetic technology is the technology using vacuum, i.e. air void, and vacuum grippers. The gripper, when attached to the sheet metal, creates an insulated cavity between the sheet metal and the gripper, from which air is sucked out and the resulting vacuum creates a clamping force holding the sheet metal to the gripper. Again, this technology is dependent on a vacuum of air generated by a compressor or rather an electrically driven vacuum pump, so an electric current is also required. However, the advantage is that once the vacuum is created, it is protected by a vacuum valve that will not open unless it receives an electrical impulse, i.e. the connection between the gripper and the sheet metal will not release in the event of a power failure. In addition, non-magnetic materials such as plastics, glass, etc. can also be moved by vacuum.

An essential part of this transport technology is the transport frame, which is attached to a supporting element, e.g. a manipulator, crane, robotic arm, etc. The carrying frame then has grippers with vacuum grippers.

From previous practice, a handling frame with tentacles is known, where the tentacles are arranged on the frame in a fixed geometry. At the end of the gripper is an actuator or gripper with a vacuum head, and some technologies are already known where each vacuum head has its own air shut-off. These frames are used to grip the same shape and size of the sheet material being transferred. The frame also includes pressure lines in the form of hoses and electrical lines for controlling vacuum valves, position and vacuum sensors. The advantages of this technology are low weight, simplicity of the system, and relatively low cost. The disadvantage of this design is the non-universality, because for each shape of sheet material it is necessary to make an exchange and to have in stock the entire handling equipment, handling equipment. Due to the necessity of exchange, operational downtime etc. occurs.

The shortcomings of this device are overcome by the technology where the handling frame is equipped with arms with variable arm geometry. Each arm is usually equipped with at least one joint which is driven by a separate electric motor. The electric motor is controlled remotely, but part of each arm is an electric drive control unit. The electric drive allows the shape of the arm to be adjusted to the desired position, according to the shape and size of the board being gripped. An example of this technology is document US 11,059,168 B2. Here, each arm has a pair of joints that are capable of independent movement of each other, and the arm is also provided with a clutch that turns on and off the ability to move both joints. The advantage of the present invention is that it has a fully functional active change of the geometry of the arms according to the customer's requirement, i.e. when changing the type or size of the material to be transferred, it is quite easy and quick to make a complete adjustment of the geometry of the handling frame without much production downtime. The main disadvantage is the complexity of this technology, where electric motors are part of each gripper. So many electric motors means high weight and the risk of increased failure of the whole device. If one electric motor fails, the whole device becomes inoperative. In addition, the high weight of components and wiring must be compensated for by stronger and more expensive materials or by the larger size and robustness, and thus load capacity, of the handling frame. Typically, the operation of the individual components of the handling frame and the carrier of the frame is controlled and managed by a programmable logic controller (PLC). This is basically an industrial computer that is very robust and is adapted to control production processes, i.e. the work of assembly lines, machines, robotic equipment, etc. PLC is suitable where high reliability of control and operation, easy programming and simultaneous diagnosis of possible errors are required. From document DE 102018105025A1 is known, that the gripping frame is formed by a supporting frame with arm with joint coupling with with a joint coupling provided with an articulated brake. Document US2016271678A1 discloses an adjustment device.

The main task of the sought solution is to overcome the shortcomings of the solutions known from the current state of the art, to design and build such a device for handling sheet materials, which would have all the advantages of the device according to the documents US 11,059,168 B2, US2016271678A1 and DE 102018105025A1, but at the same time would be lighter, would have higher reliability, i.e. would contain fewer electrical components, wiring.

### Summary of the invention

The invention described below overcomes the shortcomings of currently known devices for handling sheet materials. The sheet material handling device comprises two basic parts, which are a handling fixture and an adjusting fixture. The essence of this solution is the elimination of the complexity of the handling device, which is divided into a part that actually physically handles the sheets and other sheet materials, and a setting part that is located in one of the adjacent sections of the work line. The part that performs the direct handling motion is the handling fixture, which is based on passive elements, thus being free of electric drives or other types of joint drives, while also significantly reducing the amount of control wiring required to operate the various moving elements that use electricity, pressurized air or hydraulic fluid to move. Also, the control wiring is freed from separate control units for individual drives.

The basis of the handling fixture is a support frame that is fitted with at least one adapter or fixture. The adapter or fixture serves to attach the support frame to the robot or manipulator, which moves the support frame as a compact unit within the handling space of the work line. At least two arms are fixedly or pivotally attached to the support frame, each arm being divided into at least two semi-arms. At least one of the semi-arms is pivotally attached to the other. Typically, the semi-arm connected to the support frame is fixedly attached to that support frame. At least one pivotally attached semi-arm is provided with at least one gripping member, which is always at least the semi-arm furthest from the support frame. Between the movably coupled semi-arms at least one hinge is arranged with a hinge coupling which is provided with a hinge brake. The handling device is further provided with a first control line for distributing electrical power and/or air and/or hydraulic fluid. This first control line is used to control the joint and/or the gripping member. The first control conduit is connected via an adapter to the electrical power and/or air and/or hydraulic fluid distribution of the robot or manipulator. The electrical wiring and the air and hydraulic wiring controls are then connected to a work line control unit, which is provided with a first software module that carries instructions for controlling the flow of air and/or electrical energy and/or hydraulic fluid to the joint and/or gripper. The joint is rotatable, the joint coupling with the joint brake being passive with a pressure or electric lock. The sheet material handling equipment further includes at least one adjusting fixture for actively adjusting the position of the arm and/or for unlocking the articulating brake.

In a preferred embodiment, the adjusting fixture comprises an adjustment frame comprising at least two parallel longitudinally disposed longitudinal members and at least two parallel transversely disposed cross members joined together to form a compact unit. The adjustment frame is provided with at least one longitudinal linear rail and at least one transverse linear rail. Further, the adjustment frame is also provided with at least one adjustment device for actively adjusting the position of the arm and/or for unlocking the articulated brake. The adjustment device is arranged on the transverse linear rail. The adjustment frame is further provided with at least two seating arms for mounting the handling fixture on the adjusting fixture, and also with a second control conduit adapted to be connected to the power and/or hydraulic fluid and/or air supply of the working line. This work line distribution is connected to a work line control unit, the control unit being provided with a second software module carrying instructions for controlling the flow of electrical power and/or hydraulic fluid and/or air to the transverse drive unit, the longitudinal drive unit and the adjustment device.

In another preferred embodiment, the longitudinal linear rail includes at least one longitudinal drive unit, at least one motion stop, at least one longitudinal motion line and a sliding beam. The longitudinal drive unit is arranged at one end of the adjustment frame. The sliding beam is mounted on longitudinal rails which are mounted on at least two parallel longitudinal members.

In a further preferred embodiment, the transverse linear rail includes at least one transverse drive unit arranged at one end of the sliding beam. The sliding beam is provided with a transverse motion line on which the adjustment device is mounted.

In the following preferred embodiment, the longitudinal drive unit and the transverse drive unit are linear stepper motors or servomotors. The longitudinal motion line and the transverse motion line are any of the devices of the group consisting of: a linear belt rail, a magnetic linear rail, a motion screw rail, a toothed rack rail. The longitudinal motion line and the transverse motion line allow movement of the adjustment device in two horizontal axes, the longitudinal motion line moving the transverse motion line in one longitudinal axis and the transverse motion line moving the adjustment device itself in the transverse axis. However, the motion effect would be the same if the longitudinal motion line moved the adjustment device and the transverse motion line moved it.

In yet another advantageous embodiment, the adjustment device comprises a carrier with an adjusting drive fitted with an adjusting arm. The adjusting arm is pivotally arranged on the shaft of the adjusting drive and is provided with a vertical extension drive with a gripping fork. The vertical extension drive is a linear drive of pneumatic, electric or electromagnetic origin. The vertical extension drive is then used to move the gripping fork vertically, which in its upper part grips and secures the gripped semi-arm and, after unlocking the locking joint, i.e. releasing the joint brake by the supply of external energy or pressure fluid, allows the adjusting arm to set the new horizontal position of the functional member by its rotation.

In another advantageous version, the control unit is part of a single programmable logic controller PLC that controls the operation of the entire work line, which is also equipped with a third software module. This third software module carries information for controlling the movement of the robot or manipulator. The PLC is further provided with a Human Machine Interface driver, designed to program, monitor, control and collect data from the programmable logic controller.

In a further advantageous embodiment, the adjusting drive is an electric motor.

In a further advantageous embodiment, the adapter is provided with an electrical distribution box for connecting the first control circuit in the electrical embodiment with the power distribution of the robot or manipulator and the first control unit. The function of the junction box can be replaced, for example, by a connector connection of the two electrical wiring.

In yet another advantageous embodiment, the adapter is provided with a valve terminal for connecting the first control line in the pressure version to the pressure line of the robot or manipulator. As mentioned above, the pressure manifold may be air or hydraulic.

In another advantageous version, the electrical control cabinet is equipped directly with the electric drives.

The main advantage of the invention is that the design of the sheet material handling device is technically simpler, cheaper and much lighter than conventional devices used in the market. As a result, a less powerful and therefore less expensive crane, robotic arm or other device carrying and handling sheet material handling equipment can be used to carry the sheet material handling equipment. Fewer control and motion electronics, electrical, pneumatic and hydraulic circuits located directly on the sheet material handling equipment make the equipment lighter, but also more reliable and less likely to fail. The lighter design is also due to the division of the classical sheet material handling equipment into a handling fixture and adjusting fixture, where passive elements can be used to control the joints.

### Brief description of the drawings

The invention will be explained in more detail by means of the drawings which illustrate:
- Fig. 1: 3D perspective view of the sheet material handling equipment in the state of the handling fixture being placed on the setting fixture, without displaying the control wiring and control and operating elements,
- Fig. 2: 3D perspective view of the sheet material handling equipment in the state of separation of the handling fixture from the adjusting fixture, without display of the control wiring and control and operating elements,
- Fig. 3: 3D perspective view of a stand-alone handling fixture in a 16-arm design, consisting of one fixed semi-arm and one swivel semi-arm, with vacuum suction cups on the swivel semi-arm. The display is without control wiring and control and operating elements,
- Fig. 4: 3D perspective view of a stand-alone adjusting fixture with two longitudinal linear rails, two transverse linear rails, two adjusting fixtures. The drives are electric, with the longitudinal and transverse motion lines consisting of a linear belt rail,
- Fig. 5: Side view of the sheet material handling device in the state of separation of the handling fixture from the adjusting fixture, without the control wiring and control and operating elements,
- Fig. 6: Side detail view of the adjustment module connected to the arm.

### Examples of invention embodiment

### Example 1:

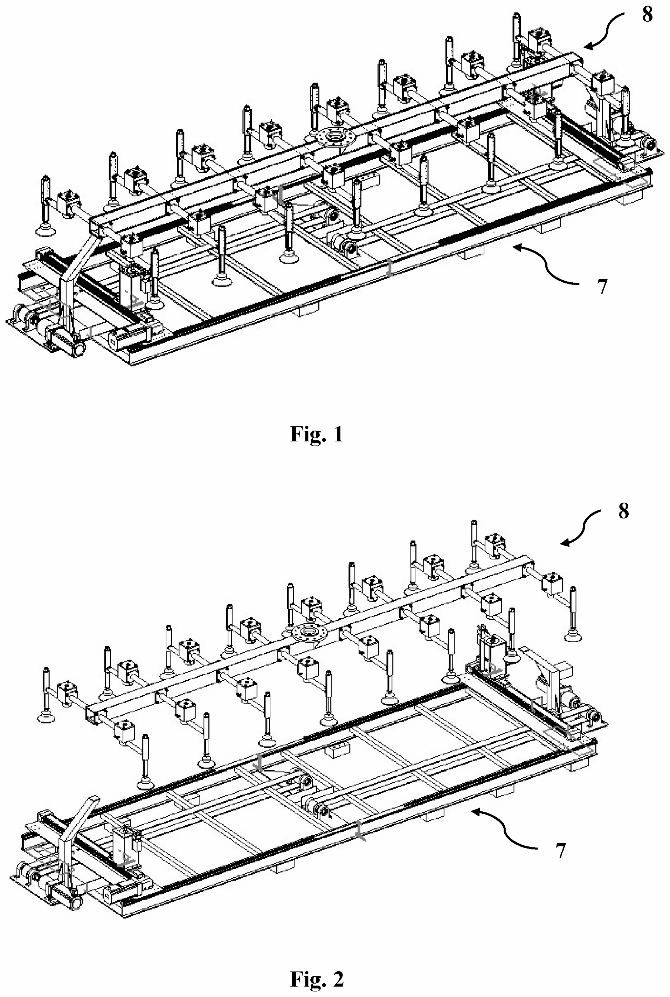

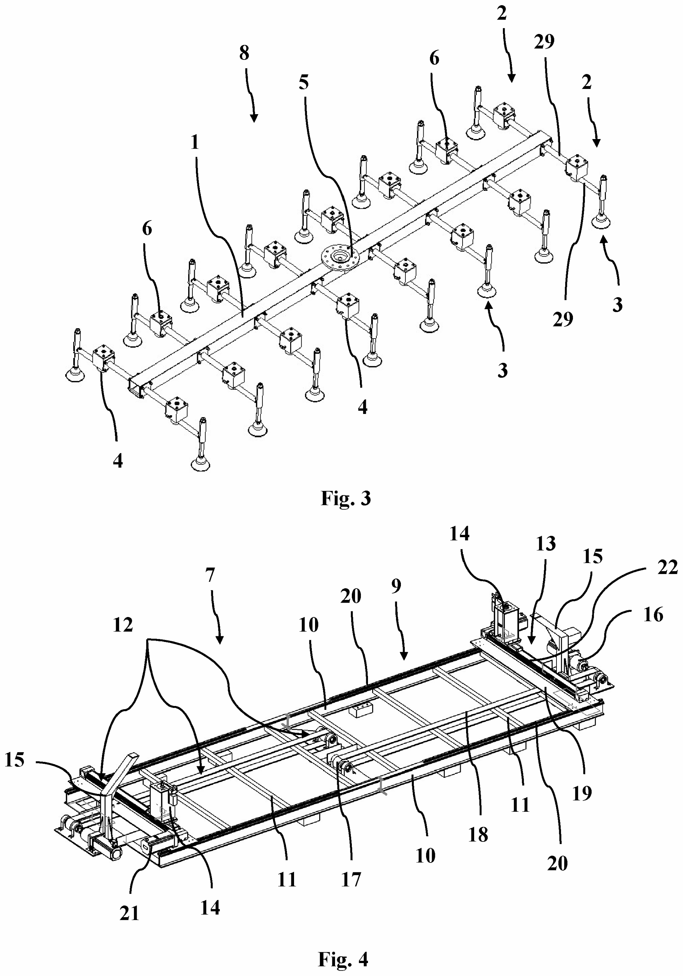

The basis of the sheet material handling device illustrated in Figures 1 to 6 is a similar device known from the prior art. By default, the sheet material handling device comprises a handling fixture 8, the base of which is a support frame 1. This frame 8 is, in this particular example of an embodiment of the invention, a single adapter 5 by means of which the support frame 1 is fixed to a robot or manipulator. The support frame 1 is further provided with arms 2 formed by a pair of semi-arms 29. The semi-arms 29 arranged closer to the support frame 1 are fixedly attached to this support frame 1. The second semi-arm 29 of the arm 2 is then pivotally fixed to this fixedly anchored semi-arm 29. This pivotal connection of the two semi-arms 29 is formed by a hinge 4 with a hinge coupling 6 which is provided with a hinge brake. The movably fixed semi-arm 29 is provided at its free end with a single gripping member 3 provided with a functional member 23 terminated, in this specific example, with a vacuum suction cup 25. This standard and common arrangement of the gripping member 3 serves for firmly gripping the sheet metal for its manipulation, where the vacuum suction cup 25 can be replaced, for example, by an electromagnetic grip. For controlling the movement functions, the handling fixture 8 is provided as standard with a first control line, not shown here, which provides for the distribution of electrical power and/or air and/or hydraulic fluid over the handling fixture 8. The non-displayed first control conduit for electrical power and/or air and/or hydraulic fluid is by default connected to the electrical power and/or air and/or hydraulic fluid conduit of the robot or manipulator and through it to the non-displayed work line control unit provided with the first software module. This first software module carries instructions for controlling the flow of air and/or electrical energy and/or hydraulic fluid to the joint 4. In this particular example embodiment of the invention, the joint 4 is rotatable and the joint coupling 6 with the joint brake is passive with an electric lock.

The sheet material handling equipment according to this particular example further comprises an adjusting fixture 7 as illustrated in Figures 1, 2, 4 and 5. The base of the adjusting fixture 7 is an adjustment frame 9. The latter is formed by two parallel longitudinal members 10 and eight parallel cross members 11, which are joined together to form a compact unit. The adjustment frame 9 is further provided with two longitudinal linear rails 12 and two transverse linear rails 13. Each transverse linear traverse 13 is provided with a single adjustment device 14. The adjustment frame 9 is further provided with two seating arms 15 for mounting the handling fixture 8 on the adjusting fixture 7. Also, the adjustment frame 9 is provided as standard with an electrical line, not shown here, connected to the electrical line of the work line and its control unit. This control unit is also provided with a second software module for this purpose, which carries instructions for controlling the flow of electrical power simultaneously to the transverse drive unit 21, the longitudinal drive unit 16 and the adjustment device 14.

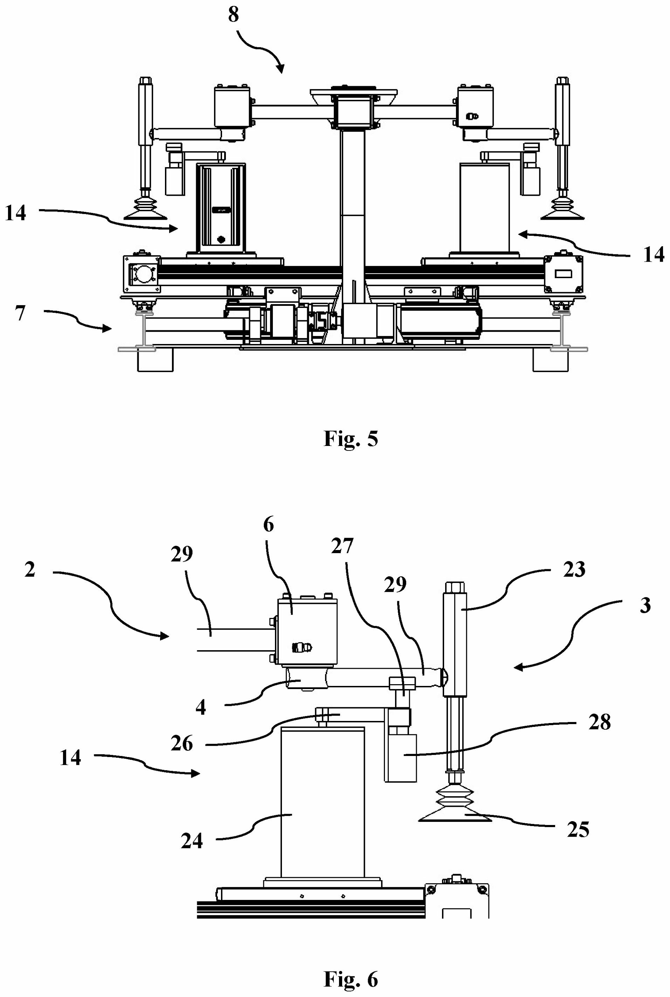

According to this same example embodiment of the invention, each longitudinal linear rail 12 includes one longitudinal drive unit 16 arranged at one end of the adjustment frame 9. Each longitudinal linear rail 12 also includes two motion stops 17 of the longitudinal motion line 18. The sliding beam 19 is mounted on two longitudinal rails 20 for longitudinal movement, which are mounted on the longitudinal members 10. Each transverse linear rail 13 in this particular example includes one transverse drive unit 21, which is arranged at one end of the sliding beam 19. The sliding beam 19 is provided with a transverse motion line 22 on which the adjustment device 14 is mounted. The longitudinal drive unit 16 and the transverse drive unit 21 are linear stepper motors, and the longitudinal motion line 18 and the transverse motion line 22 are linear belt drives. Each adjustment device 14, according to the present example embodiment of the invention illustrated in Figure 6, comprises an adjusting drive carrier 24 which is a vertically mounted electric motor to whose motion shaft an adjusting arm 26 is mounted. The adjusting arm 26 is provided with a linear electric vertical extension drive 28 which is a servo motor. The vertical extension drive 28 is then fitted with a gripping fork 27.

### Example 2:

In this particular but not shown example embodiment of the technical solution, formed according to Example 1, the difference is that the adapter 5 is provided with a valve terminal. In this embodiment, the first pressure control line is connected to the valve terminal and through the valve terminal to the pressure control line of the robot or manipulator.

### Industrial applicability

The invention will find application in industrial plants where large flat plates, such as large sheet metal, are handled.

### List of reference marks

- 1: support frame
- 2: arm
- 3: gripping member
- 4: joint
- 5: adapter
- 6: joint coupling
- 7: adjusting fixture
- 8: handling fixture
- 9: adjustment frame
- 10: longitudinal members
- 11: cross members
- 12: longitudinal linear rail
- 13: transverse linear rail
- 14: adjustment device
- 15: seating arm
- 16: longitudinal drive unit
- 17: motion stop
- 18: longitudinal motion lines
- 19: sliding beam
- 20: longitudinal rails
- 21: transverse drive unit
- 22: transverse motion lines
- 23: functional member
- 24: carrier
- 25: vacuum suction cup
- 26: adjusting arm
- 27: gripping fork
- 28: vertical extension drive
- 29: semi-arm

## Claims

1. An equipment for handling sheet materials comprising a handling fixture (8) comprising a support frame (1) with at least one adapter (5) or fixture adapted for attaching the support frame (1) to a robot or manipulator, with at least two arms (2) fixedly or pivotally anchored to the support frame (1), wherein each arm (2) is formed by at least two semi-arms (29) pivotally connected to each other, wherein at least one semi-arm (29) is provided with at least one gripping member (3) at its free end, wherein the pivotal connection between the semi-arms (29) and/or the arm (2) and the support frame (1) is formed by a joint (4) with a joint coupling (6) provided with an articulated brake, wherein the handling fixture (8) is further provided with a first control line for distributing electrical power and/or air and/or hydraulic fluid for controlling the joint (4) and/or the gripping member (3) adapted to be connected via an adapter (5) to the electrical power supply and/or hydraulic fluid and/or air to the robot or manipulator and to a work line control unit provided with a first software module carrying instructions for controlling the flow of air and/or electrical energy and/or hydraulic fluid to the joint (4) and/or the gripper (3), the joint (4) is rotatable, the joint coupling (6) with the joint brake is passive with a pressure or electric lock,
**characterized in that** it
further comprises at least one externally arranged adjustment fixture (7) for actively adjusting the position of the arm (2) and/or for unlocking the joint brake, wherein the adjusting fixture (7) comprises a adjustment frame (9) comprising at least two parallel longitudinal members (10) and at least two parallel cross members (11) connected in one compact unit, with at least one longitudinal linear rail (12), with at least one transverse linear rail (13), with at least one adjustment device (14) for actively adjusting the position of the arm and/or for unlocking the articulated brake, the adjustment device (14) being arranged on the transverse linear rail (13), further, the adjustment frame (9) is provided with at least two reaching arms (15) for mounting the handling fixture (8) on the adjusting fixture (7), and further, the adjustment frame (9) is provided with a second control line for distributing electrical power and/or hydraulic fluid and/or air adapted to connect to the electrical power and/or hydraulic fluid and/or air distribution of the work line and to the control unit of the work line, wherein the control unit is provided with a second software module carrying instructions for controlling the flow of electrical power and/or hydraulic fluid and/or air to the transverse drive unit (21), the longitudinal drive unit (16) and the adjustment device (14).

2. The sheet material handling equipment according to claim 1, **characterized in that** the longitudinal linear rail (12) comprises at least one longitudinal drive unit (16) arranged at one end of the adjustment frame (9), at least one motion stop (17), at least one longitudinal movement line (18) and a sliding beam (19) mounted on longitudinal rails (20) which are mounted on at least two parallel longitudinal members (10).

3. The sheet material handling equipment according to claims 1 and 2, **characterized in that** the transverse linear rail (13) comprises at least one transverse drive unit (21) arranged at one end of a sliding beam (19) provided with a transverse movement line (22), wherein the transverse movement line (22) slidably houses an adjustment device (14).

4. The sheet material handling equipment according to claims 2 and 3, **characterized in that** the longitudinal drive unit (16) and the transverse drive unit (21) are linear stepper motors or servomotors, and the longitudinal motion line (18) and the transverse motion line (22) are devices from the group consisting of: linear belt rail, magnetic linear rail, motion screw rail, toothed comb rail.

5. The sheet material handling equipment according to any one of claims 1 to 4, **characterized in that** the adjustment device (14) comprises a carrier (24) with an adjusting drive with an adjusting arm (26) mounted on the shaft of the adjusting drive and with a gripping fork (27) fixed via a linear pneumatic or electric or electromagnetic vertical extension drive (28) to the adjusting arm (26).

6. The sheet material handling equipment according to any one of claims 1 to 5, **characterized in that** the setting drive is an electric motor.

7. The sheet material handling equipment according to any one of claims 1 to 6, **characterized in that** the adapter (5) is provided with an electrical junction box for connecting the first control circuit with the electrical circuit of the robot or manipulator and the control unit.

8. The sheet material handling equipment according to claim 7, **characterized in that** the electrical control cabinet is provided with electric drives.

9. The sheet material handling equipment according to any one of claims 1 to 6, **characterized in that** the adapter (5) is provided with a valve terminal for connecting the first control line to the pressure line of the robot or manipulator.

## Patentansprüche

1. Eine Vorrichtung zum Handhaben von Flachmaterialien, die eine Handhabungseinrichtung (8) umfasst, die einen Tragrahmen (1) mit mindestens einem Adapter (5) oder einer Befestigungseinrichtung zum Anbringen des Tragrahmens (1) an einem Roboter oder Manipulator umfasst, mit mindestens zwei zu dem Tragrahmen (1) fest oder schwenkbar befestigten Armen (2), wobei jeder Arm (2) aus mindestens zwei schwenkbar verbundenen Armsegmenten (29) besteht, wobei mindestens ein Armsegment (29) mit mindestens einem Greifelement (3) an seinem freien Ende versehen ist, wobei die schwenkbare Verbindung zwischen den Armsegmenten (29) und/oder dem Arm (2) und dem Tragrahmen (1) durch ein Gelenk (4) mit einer Gelenkkupplung (6) gebildet wird, die mit einer Gelenkbremse ausgestattet ist, wobei die Handhabungseinrichtung (8) ferner mit einer ersten Steuerleitung zur Verteilung von elektrischer Energie und/oder Luft und/oder Hydraulikflüssigkeit zur Steuerung des Gelenks (4) und/oder des Greifelements versehen ist, die dafür ausgelegt ist, über einen Adapter (5) mit der Stromversorgung und/oder Hydraulikflüssigkeit und/oder Luft mit dem Roboter oder Manipulator und zu der Steuerungseinheit der Arbeitsleitung angeschlossen zu werden, die mit einem ersten Softwaremodul ausgestattet ist, das Anweisungen zur Steuerung des Flusses von Luft und/oder elektrischer Energie und/oder Hydraulikflüssigkeit zum Gelenk (4) und/oder Greifelement (3) enthält, wobei das Gelenk (4) drehbar ist, die Gelenkkupplung (6) mit der Gelenkbremse passiv mit einer druck- oder elektrisch betätigten Verriegelung ausgebildet ist,
**gekennzeichnet dadurch, dass**
die ferner mindestens eine extern angeordnete Verstelleinrichtung (7) zur aktiven Verstellung des Arms (2) und/oder zum Entriegeln der Gelenkbremse umfasst, wobei die Verstelleinrichtung (7) einen Verstellrahmen (9) aufweist, der mindestens zwei parallele Längsträger (10) und mindestens zwei parallele Querträger (11) aufweist, die zu einer kompakten Einheit verbunden sind, mit mindestens einer Längslineareinheit (12), mit mindestens einer Querlineareinheit (13), mit mindestens einer Verstelleinheit (14) zur aktiven Verstellung des Arms und/oder zum Entriegeln der Gelenkbremse, wobei die Verstelleinheit (14) auf der Querlineareinheit (13) angeordnet ist, ferner, der Verstellrahmen (9) mindestens mit zwei Auslegerarmen (15) zur Anbringung der Handhabungseinrichtung (8) an der Verstelleinrichtung (7) versehen ist, und ferner, der Verstellrahmen (9) mit einer zweiten Steuerleitung zur Verteilung von elektrischer Energie und/oder Hydraulikflüssigkeit und/oder Luft versehen ist, die dafür ausgelegt ist, mit der Stromversorgung und/oder Hydraulikflüssigkeit und/oder Luft der Arbeitsleitung sowie mit der Steuerungseinheit der Arbeitslinie verbunden zu werden, wobei die Steuerungseinheit mit einem zweiten Softwaremodul ausgestattet ist, das Anweisungen zur Steuerung des Flusses von elektrischer Energie und/oder Hydraulikflüssigkeit und/oder Luft zur Querantriebseinheit (21), der Längsantriebseinheit (16) und der Verstelleinheit (14) enthält.

2. Eine Vorrichtung zum Handhaben von Flachmaterialien nach Anspruch 1, **gekennzeichnet dadurch, dass** die Längslineareinheit (12) mindestens eine am Ende des Verstellrahmens (9) angeordnete Längsantriebseinheit (16), mindestens einen Bewegungsanschlag (17), mindestens eine Längsbewegungsführung (18) und einen auf Längsführungsschienen (20) gelagerten Schiebebalken (19) umfasst, wobei die Längsführungsschienen auf mindestens zwei parallelen Längsträgern (10) befestigt sind.

3. Eine Vorrichtung zum Handhaben von Flachmaterialien nach Ansprüchen 1 und 2, **gekennzeichnet dadurch, dass** die Querlineareinheit (13) mindestens eine an einem Ende des Schiebebalkens (19) gelagerte Querantriebseinheit (21) umfasst, die mit einer Querbewegungsführung (22) versehen ist, wobei in der Querbewegungsführung (22) eine Verstelleinheit (14) verschiebbar gelagert ist.

4. Eine Vorrichtung zum Handhaben von Flachmaterialien nach Ansprüchen 2 und 3, **gekennzeichnet dadurch, dass** die Längsantriebseinheit (16) und die Querantriebseinheit (21) Linearschrittmotoren oder Servomotoren sind, und die Längsbewegungsführung (18) und die Querbewegungsführung (22) Vorrichtungen aus der Gruppe sind, bestehend aus: Zahnriemenführung, magnetische Linearführung, Spindelführung, Zahnstangenführung.

5. Eine Vorrichtung zum Handhaben von Flachmaterialien nach einem der Ansprüche 1 bis 4,
**gekennzeichnet dadurch, dass** die Verstelleinheit (14) einen Träger (24) mit einem Verstellantrieb umfasst, auf dessen Welle ein Verstellarm (26) angeordnet ist, wobei an dem Verstellarm (26) über einen linearen pneumatischen oder elektrischen oder elektromagnetischen Vertikalhubantrieb (28) eine Greifgabel (27) befestigt ist.

6. Eine Vorrichtung zum Handhaben von Flachmaterialien nach einem der Ansprüche 1 bis 5, mit der Gelenkbremse passiv mit einer druck- oder elektrisch betätigten Verriegelung ausgebildet ist,
**gekennzeichnet dadurch, dass die**
ferner mindestens eine extern angeordnete Verstelleinrichtung der Verstellantrieb ein Elektromotor ist.

7. Eine Vorrichtung zum Handhaben von Flachmaterialien nach einem der Ansprüche 1 bis 6,
**gekennzeichnet dadurch, dass** der Adapter (5) mit einem elektrischen Anschlusskasten versehen ist, der den ersten Steuerkreis mit dem elektrischen Schaltkreis des Roboters oder des Manipulators sowie der Steuereinheit verbindet.

8. Eine Vorrichtung zum Handhaben von Flachmaterialien nach Anspruch 7,
**gekennzeichnet dadurch, dass** der elektrische Schaltschrank mit elektrischen Antrieben versehen ist.

9. Eine Vorrichtung zum Handhaben von Flachmaterialien nach einem der Ansprüche 1 bis 6,
**gekennzeichnet dadurch, dass** der Adapter (5) mit einer Ventilinsel versehen ist, die den ersten Steuerkreis mit der Druckleitung des Roboters oder des Manipulators verbindet.

## Revendications

1. Dispositif de manutention de matériaux en feuilles comprenant un dispositif de préhension (8) comportant un châssis de support (1) muni d'au moins un adaptateur (5) ou dispositif de fixation destiné à fixer le châssis de support (1) à un robot ou à un manipulateur, avec au moins deux bras (2) fixés de manière rigide ou pivotante au châssis de support (1), dans lequel chaque bras (2) est formé d'au moins deux demi-bras (29) reliés entre eux de manière pivotante, dans lequel au moins un demi-bras (29) est équipé d'au moins un élément de préhension (3) à son extrémité libre, dans lequel la connexion pivotante entre les demi-bras (29) et/ou le bras (2) et le châssis de support (1) est formée par une articulation (4) dotée d'un accouplement d'articulation (6) muni d'un frein articulé, dans lequel le dispositif de manutention (8) est en outre muni d'une première ligne d'alimentation pour distribuer de l'énergie électrique et/ou de l'air et/ou du fluide hydraulique permettant de commander l'articulation (4) et/ou l'élément de préhension (3), adapté pour être raccordé via un adaptateur (5) à l'alimentation en énergie électrique et/ou en fluide hydraulique et/ou en air du robot ou du manipulateur, ainsi qu'à une unité de commande de ligne de travail dotée d'un premier module logiciel contenant des instructions pour régler le débit d'air et/ou d'énergie électrique et/ou de fluide hydraulique vers l'articulation (4) et/ou le dispositif de préhension (3), l'articulation (4) est rotative, l'accouplement d'articulation (6) avec le frein d'articulation est passif et comporte un verrouillage par pression ou électrique,
**caractérisé en ce qu'**
il comprend en outre au moins un dispositif de réglage (7) disposé à l'extérieur pour régler activement la position du bras (2) et/ou pour déverrouiller le frein d'articulation, le dispositif de réglage (7) comprenant un châssis de réglage (9) comportant au moins deux éléments longitudinaux parallèles (10) et au moins deux éléments transversaux parallèles (11) reliés en une unité compacte reliés, avec au moins un guidage linéaire longitudinal (12), avec au moins un guidage linéaire transversal (13), ainsi qu'au moins un dispositif de réglage (14) destiné à régler activement la position du bras et/ou à déverrouiller le frein d'articulation, le dispositif de réglage (14) étant disposé sur le guidage linéaire transversal (13) ; en outre, le châssis de réglage (9) est muni d'au moins deux bras d'extension (15) destinés au montage du dispositif de manutention (8) sur le dispositif de réglage (7) ; et en outre, le châssis de réglage (9) est muni d'une deuxième ligne de commande destinée à la distribution d'énergie électrique et/ou de fluide hydraulique et/ou d'air, adaptée pour se raccorder au système de distribution d'énergie électrique et/ou de fluide hydraulique et/ou d'air de la ligne de travail ainsi qu'à l'unité de commande de la ligne de travail, l'unité de commande étant munie d'un deuxième module logiciel contenant des instructions pour commander le débit d'énergie électrique et/ou de fluide hydraulique et/ou d'air vers l'unité d'entraînement transversal (21), l'unité d'entraînement longitudinale (16) et le dispositif de réglage (14).

2. Le dispositif de manutention de matériaux en feuilles selon la revendication 1,
**caractérisé en ce que** le guidage linéaire longitudinal (12) comprend au moins une unité d'entraînement longitudinale (16) disposée à une extrémité du châssis de réglage (9), au moins une butée de fin de course (17), au moins une ligne de déplacement longitudinal (18) et une poutre coulissante (19) montée sur des guidages longitudinaux (20) qui sont montés sur au moins deux éléments longitudinaux parallèles (10).

3. Le dispositif de manutention de matériaux en feuilles selon les revendications 1 et 2, **caractérisé en ce que** le guidage linéaire transversal (13) comprend au moins une unité d'entraînement transversale (21) disposée à une extrémité d'une poutre coulissante (19) munie d'une glissière de déplacement transversal (22), la glissière de déplacement transversal (22) logeant de manière coulissante un dispositif de réglage (14).

4. Le dispositif de manutention de matériaux en feuilles selon les revendications 2 et 3, **caractérisé en ce que** l'unité d'entraînement longitudinale (16) et l'unité d'entraînement transversale (21) sont des moteurs pas à pas linéaires ou des servomoteurs, et la ligne de déplacement longitudinale (18) et la glissière de déplacement transversal (22) sont des dispositifs appartenant au groupe constitué par : un rail de guidage linéaire, un rail de guidage magnétique, un rail de guidage à vis de mouvement, un rail de guidage à crémaillère.

5. Le dispositif de manutention de matériaux en feuilles selon l'une quelconque des revendications 1 à 4, c**aractérisé en ce que** le dispositif de réglage (14) comprend un support (24) muni d'un mécanisme d'entraînement de réglage comportant un bras de réglage (26) monté sur l'arbre de l'entraînement de réglage et d'une fourche de préhension (27) fixée par l'intermédiaire d'un entraînement linéaire pneumatique, électrique ou électromagnétique à extension verticale (28) au bras de réglage (26).

6. Le dispositif de manutention de matériaux en feuilles selon l'une quelconque des revendications 1 à 5, **caractérisé en ce que** le mécanisme d'entraînement de réglage est un moteur électrique.

7. Le dispositif de manutention de matériaux en feuilles selon l'une quelconque des revendications 1 à 6, **caractérisé en ce que** l'adaptateur (5) est muni d'un boîtier de raccordement électrique destiné à relier le premier circuit de commande au circuit électrique du robot ou du manipulateur et à l'unité de commande.

8. Le dispositif de manutention de matériaux en feuilles selon la revendication 7,
**caractérisé en ce que** l'armoire de commande électrique est équipée d'entraînements électriques.

9. Le dispositif de manutention de matériaux en feuilles selon l'une quelconque des revendications 1 à 6, **caractérisé en ce que** l'adaptateur (5) est muni d'un terminal de vanne destiné à relier la première ligne de commande à la conduite de pression du robot ou du manipulateur.
